# EUROPÄISCHE PATENTANMELDUNG

(11) **EP 3 367 558 A1**
(43) Veröffentlichungstag der Anmeldung: **29.08.2018**
(21) Anmeldenummer: 17157849.5
(22) Anmeldetag: 24.02.2017
(51) Int. Cl.: H02P 25/064, H02P 29/024, H02P 6/00

(54) **VERFAHREN ZUM BETREIBEN EINES LINEARMOTORBASIERTEN TRANSPORTSYSTEMS UND REGELEINHEIT**

(71) Anmelder: Siemens Aktiengesellschaft, 80333 München (DE)
(72) Erfinder: Jäntsch, Michael, 91052 Erlangen (DE); Lowis, Steffen, 52525 Waldfeucht (DE); Schulte, Peter, 91301 Forchheim (DE)

(57) **Zusammenfassung**

Die Erfindung betrifft ein Verfahren zum Betreiben eines linearmotorbasierten Transportsystems (100), bei welchem ein Transportläufer (14) auf einem Statorsegment (13.1,13.2) bewegt wird, wobei das Statorsegment (13.1,13.2) mittels eines Antriebsmoduls (2a) mit einem Statorstrom (I_{q}) versorgt wird, wodurch ein Magnetfeld gebildet wird und dadurch eine Vorschub-Kraft für einen Vorschub des Transportläufers (14) entsteht,
wobei
- aus dem Statorstrom (I_{q}) eine für eine aktuell notwendige lineare Bewegung des Transportläufers (14) aktuell herrschende mechanische Kraft (Fₘ) ermittelt wird, und dass
- aus einer aktuellen Geschwindigkeit (Vᵢₛₜ) des Transportläufers (14) und einer Übertragungsfunktion eine modellierte Kraft (F_{mmod}) ermittelt wird, wobei die Übertragungsfunktion als ein Kraftmodell (KM) die mechanische Kraft eines Transportläufers (14) in einen Normalzustand nachbildet,
- eine Differenzkraft (F_{zus}) durch Subtraktion der aktuell herrschenden mechanischen Kraft (Fₘ) von der modellierten Kraft (F_{mmod}) gebildet wird und geprüft wird, ob
- die Differenzkraft (F_{zus}) einen vorgebbaren Schwellwert (Sw) überschreitet und wenn dies der Fall ist ein Wartungssignal (21) generiert wird, welches den Betreiber veranlasst den Transportläufer zu warten.

## Beschreibung

Die Erfindung betrifft ein Verfahren zum Betreiben eines linearmotorbasierten Transportsystems, bei welchem ein Transportläufer auf einem Statorsegment bewegt wird, wobei das Statorsegment mittels eines Antriebsmoduls mit einem Statorstrom versorgt wird, wodurch ein Magnetfeld gebildet wird und dadurch eine Vorschub-Kraft für einen Vorschub des Transportläufers entsteht.

Des Weiteren betrifft die Erfindung eine Regeleinheit zur Regelung eines Antriebsmoduls für ein linearmotorbasiertes Transportsystem, bei welchem ein Transportläufer auf einem Statorsegment bewegt wird, wobei das Statorsegment mittels des Antriebsmoduls mit einem Statorstrom versorgt wird, wodurch ein Magnetfeld gebildet wird und dadurch eine Vorschub-Kraft für einen Vorschub des Transportläufers entsteht.

Im Sinne der Erfindung wird unter Statorsegment ein Primärteil eines Linearmotors verstanden, in dem Zusammenhang weist ein Transportläufer ein Sekundärteil des Linearmotors auf. Durch ein individuelles Bestromen von beispielsweise Spulen, zum Erzeugen eines magnetischen Wanderfeldes wird ein Magnetfeld erzeugt und der Transportläufer bzw. sein Sekundärteil kann sich über das Statorsegment bzw. dessen Primärteil hinwegbewegen. Das magnetische Wanderfeld nimmt demnach Dauermagnete des Transportläufers mit. Durch eine Regelung der Stromstärke des Stromes durch die Spulen kann ein Kraftbedarf und eine Geschwindigkeit angepasst werden.

Unter der Internet-Adresse www.festo.com/cms/de_d_5358.5.html ist ein linearmotorbasiertes Transportsystem offenbart.

Nachteilig an den bisher bekannten Transportsystemen ist es, dass verunreinigte oder verschlissene Transportläufer Ausfälle in industriellen Produktionsanlagen hervorrufen. Derzeit werden Transportläufer vorbeugend in regelmäßigen Abständen gereinigt und inspiziert. Dies führt zu erhöhten Betriebskosten, welches nicht erwünscht ist.

Eine Entscheidung, ob bestimmte fehlerhafte Betriebszustände der Transportläufer in naher Zukunft zum Ausfall oder Stillstand einer Anlage führen, ist von hoher Wichtigkeit wenn es darum geht, effizient und ohne Produktionsstopp zu produzieren.

Es ist Aufgabe der vorliegenden Erfindung ein Verfahren bzw. eine Regeleinheit bereitzustellen, welche einen drohenden Ausfall eines Transportläufers bereits im Vorfeld erkennt.

Bei den eingangs genannten Verfahren wird die Aufgabe dadurch gelöst, dass aus dem Statorstrom eine für eine aktuell notwendige lineare Bewegung des Transportläufers aktuell herrschende mechanische Kraft ermittelt wird, und dass aus einer aktuellen Geschwindigkeit des Transportläufers und einer Übertragungsfunktion eine modulierte Kraft ermittelt wird, wobei die Übertragungsfunktion als ein Kraftmodell die mechanische Kraft eines Transportläufers in einem Normalzustand nachbildet, eine Differenzkraft durch Subtraktion der aktuell herrschenden mechanischen Kraft von der modellierten Kraft gebildet wird und geprüft wird, ob die Differenzkraft einen vorgebbaren Schwellwert überschreitet und wenn dies der Fall ist, ein Wartungssignal generiert wird, welches den Betreiber veranlasst, den Transportläufer zu warten.

Im Sinne der Erfindung wird unter Normalzustand eines Transportläufers der Zustand verstanden, welcher bei einem neuen, unverschmutzten und mit intakten Rädern eingesetzten Transportläufer vorherrscht. Durch eine modellhafte Abbildung des Normalzustandes des Transportläufers, wird durch eine Erkennung von Differenzen des Modells zum realen System eine Abweichung errechnet, die über einen einstellbaren Schwellwert beispielsweise dazu führt, das der Transportläufer als verschmutzt, beschädigt oder verschlissen erkannt wird. Es werden dazu die Größen eines Antriebsmodells in einem geregelten Betrieb herangezogen. Es ergibt sich dabei eine mechanische Kraft, die sich proportional zu einem kraftbildenden Strom Iq verhält. Diese beinhaltet eine Beschleunigungskraft, eine Reibkraft im Normalzustand und eine zusätzliche Reibkraft bzw. Differenzkraft F_{zus}. Zusätzlich wird über eine Istgeschwindigkeit Vᵢₛₜ die mechanische Kraft eines Carriers im Normalzustand modelliert.

In einer weiter optimierten Ausgestaltung des Verfahrens ist es von Vorteil, dass der Schwellwert in Abhängigkeit von der Geschwindigkeit mit einer Schwellwertübertragungsfunktion ermittelt wird. Mittels eines Schwellwertmodells, welches insbesondere als eine lineare Funktion in Abhängigkeit der Geschwindigkeit modelliert wird, da die zusätzliche Kraft ja auch geschwindigkeitsabhängig ist, ist somit auch der Schwellwert geschwindigkeitsabhängig. Somit erlangt man die Möglichkeit den Schwellwert frei zu bestimmen und verschieden große Werte für die Differenzkraft bzw. die zulässige Reibkraft zuzulassen, bevor eine Abweichung vom Normalzustand erkannt wird. Dieser Schwellwert ist vorteilhafter Weise so angepasst, dass nur eine Erkennung signalisiert wird, wenn es sich um einen fehlerhaften oder verschmutzten Transportläufer handelt.

Des Weiteren ist es von Vorteil, wenn das Wartungssignal einen Transportläufer spezifischen Wartungsmerker setzt und zyklisch geprüft wird, ob ein Transportläufer einen gesetzten Wartungsmerker aufweist, und wenn dass der Fall ist, wird der Transportläufer zur Wartung auf ein Wartungssegment gesteuert oder durch eine Waschanlage gefahren. Mit Vorteil wird also jedem Transportläufer ein Wartungsmerker zugeordnet und da in der Regel die Transportläufer RFID überwacht werden, können die verschmutzten oder verschlissenen Transportläufer gesondert aussortiert werden ohne einen Produktionsstopp zu verursachen.

In einer noch weiteren Optimierung des Verfahrens wird das Wartungssignal als ein Warnsignal für eine Überschreitung einer zulässigen Reibung bei der Bewegung des Transportläufers auf dem Statorsegment gewertet und anhand des Betrages der Differenzkraft eine Aussage über eine der folgenden Fehlerarten getroffen:
- Verschmutzung des Transportläufers,
- einfacher Radbruch am Transportläufer oder
- zweifacher Radbruch am Transportläufer.

Eine erhöhte Reibkraft kann verschleißbedingte Ursachen haben, beispielsweise Abnutzung der Kunststoffräder der Transportläufer, Abmagnetisierung der Magnete durch ruckartige Bewegungen, oder Radbrüche, wobei ein Radbruch zur Blockierung eines Rades und zu einer deutlich erhöhten Reibung führt.

Aber es gibt auch verschmutzungsbedingte Ursachen, wie beispielsweise aufsammeln von Kunststoffresten, insbesondere bei Fahrten über konventionelle Transportbänder oder eine Verschmutzung mittels eines herzustellenden Produktes, beispielsweise Haarwaschmittel, oder auch eine schnelle Verklumpung des herzustellenden Produktes beispielsweise bei hohen Oberflächentemperaturen der Linearmotoren.

Daher ist es vorteilhaft, wenn im Vorfeld experimentell ermittelt wurde, welche Kräfte bei welcher Art von Verschleiß oder Defekten oder Verschmutzungen auftreten und dies mit der ermittelten Differenzkraft verglichen wird und daraus eine Aussage getroffen wird, welche Art von Defekt oder Verschmutzung es sein könnte.

Weiterhin ist es vorteilhaft, wenn mittels der Fehlerart automatisiert entschieden wird, ob der Transportläufer aussortiert werden muss oder in eine Waschanlage eingefahren wird.

Ebenfalls wird die eingangs genannte Aufgabe durch eine Regeleinheit zur Regelung eines Antriebsmoduls für ein linearmotorbasiertes Transportsystem gelöst. Bei dem Transportsystem wird ein Transportläufer auf einem Statorsegment bewegt, wobei das Statorsegment mittels des Antriebsmoduls mit einem Statorstrom versorgt wird, wodurch ein Magnetfeld gebildet wird und dadurch eine Vorschub-Kraft für einen Transportläufer entsteht, erfindungsgemäß wird ein Erkennungsmittel aufgezeigt, wobei das Erkennungsmittel folgende Komponenten umfasst, ein P-Glied mit einer Kraftkonstanten, welches ausgestaltet ist, aus dem Statorstrom eine für eine aktuell notwendige lineare Bewegung des Transportläufers aktuell herrschende mechanische Kraft zu ermitteln, ein Kraftmodell mit einer Übertragungsfunktion, welches ausgestaltet ist, aus einer aktuellen Geschwindigkeit des Transportläufers eine modellierte Kraft zu ermitteln, wobei das Kraftmodell die mechanische Kraft eines Transportläufers in einen Normalzustand nachbildet, eine Subtraktionsstelle ausgestaltet, eine Differenzkraft durch Subtraktion der aktuell herrschenden mechanischen Kraft von der modellierten Kraft bereitzustellen, ein Vergleichsmittel ausgestaltet, die Differenzkraft mit einem vorgebbaren Schwellwert zu vergleichen und bei Überschreiten des Schwellwertes durch die Differenzkraft ein Wartungssignal zu generieren.

Erfindungsgemäß wird demnach eine nach dem Stand der Technik bekannte Regeleinheit für ein linearmotorbasiertes Transportsystem mit einem Erkennungsmittel erweitert, wobei mittels des Erkennungsmittels zunächst eine mechanische Kraft eines jeweiligen Transportläufers ermittelt wird, wobei sich die mechanische Kraft proportional zu dem kraftbildenden Strom verhält und dabei eine Beschleunigungskraft und die Reibkraft im Normalzustand und die zusätzliche Reibkraft enthält. Über die Istgeschwindigkeit wird die mechanische Kraft eines Transportläufers im Normalzustand modelliert, diese beinhaltet die Beschleunigungskraft und ein Modell der Reibkraft des Transportläufers im Normalzustand. Die Differenz aus dem mittels des Statorstromes und mittels des Modells ermittelten Kräfte ergibt dann die zusätzliche Kraft.

Weiterhin ist es von Vorteil, wenn das Erkennungsmittel in der Regelungseinheit ein Schwellwertmodell aufweist, welches ausgestaltet ist, den Schwellwert in Abhängigkeit von der Geschwindigkeit mit einer Schwellwertübertragungsfunktion zu ermitteln.

In einer weiteren Ausgestaltung weist das Erkennungsmittel der Regeleinheit weiterhin ein Fehlerartenzuordnungsmittel auf, welches ausgestaltet ist, anhand des Betrages der Differenzkraft eine Aussage über eine der folgenden Fehlerarten zu treffen: Verschmutzung des Transportläufers, einfacher Radbruch am Transportläufer oder zweifacher Radbruch am Transportläufer.

Die Zeichnung zeigt ein Ausführungsbeispiel der Erfindung, dabei zeigt die
- FIG 1: ein linearmotorbasiertes Transportsystem,
- FIG 2: ein Erkennungsmittel zur Erkennung einer erhöhten Reibkraft in einer ersten Übersicht,
- FIG 3: ein Modell zur Ermittlung einer mechanischen Kraft,
- FIG 4: das Erkennungsmittel aus FIG 2 in einer erweiterten Darstellung,
- FIG 5: das Erkennungsmittel in einer nochmals detaillierteren Darstellung und
- FIG 6: eine Übersicht über eine Regelung für eine Regeleinheit mit dem erfindungsgemäß eingesetzten Erkennnungsmittel.

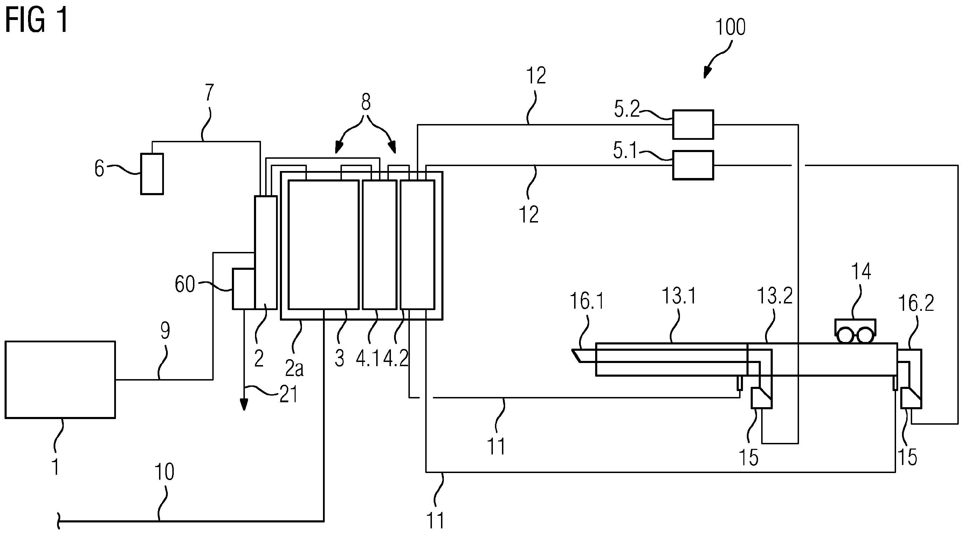

Gemäß FIG 1 ist eine Übersicht über ein linearmotorbasiertes Transportsystem 100 dargestellt. Ein Transportläufer 14 läuft über ein erstes Statorsegment 13.1 und ein zweites Statorsegment 13.2. An den Statorsegmenten 13.1,13.2 sind jeweils ein erstes Wegmesssystem 16.1 und ein zweites Wegmesssystem 16.2 angeordnet. Die Wegmesssysteme 16.1,16.2 sind an eine SSI-Geberleitung 12 angeschlossen. Die SSI-Geberleitung 12 ist jeweils mit einem ersten Gebermodul 5.1 und einem zweiten Gebermodul 5.2 verbunden, wobei die Gebermodule 5.1 und 5.2 wiederum an einen Feldbus 8 für Servoantriebe angeschlossen ist. Der Feldbus 8 ist wiederum mit einer Regeleinheit 2, einem Gleichrichter 3 und einem ersten Wechselrichter 4.1 und einem zweiten Wechselrichter 4.2 verbunden. Die Wechselrichter 4.1,4.2 versorgen über Motorzuleitungen 11 die Statorsegmente 13.1,13.2.

Die Regeleinheit 2 kann über ein Programmiergerät 1 und eine LAN-Verbindung 9 entsprechend programmiert werden oder ein Firmwareupdate erhalten. Über eine Stromversorgung 6 erhält die Regeleinheit 2 ihre 24 V Versorgungsspannung über eine Versorgungsleitung 7.

Die Regeleinheit 2 zur Regelung des Antriebsmoduls 2a für das linearmotorbasierte Transportsystem 100 weist ein Erkennungsmittel 60 auf, wobei das Erkennungsmittel 60 ausgestaltet ist, Betriebszustände von den Transportläufern 14 zu erkennen, die zum Ausfall oder zum Stillstand der Anlage führen könnten. Das Erkennungsmittel 60 erkennt präventiv eine Transportläufer-Verschmutzung, -beschädigung oder -verschleiß in einer realen Produktionsanlage, welche auf dem linearmotorbasierten Transportsystem ausgelegt ist.

Bei Erkennung eines beschädigten Transportläufers 14, beispielsweise aufgrund erhöhter Reibung, wird ein Wartungssignal 21 generiert.

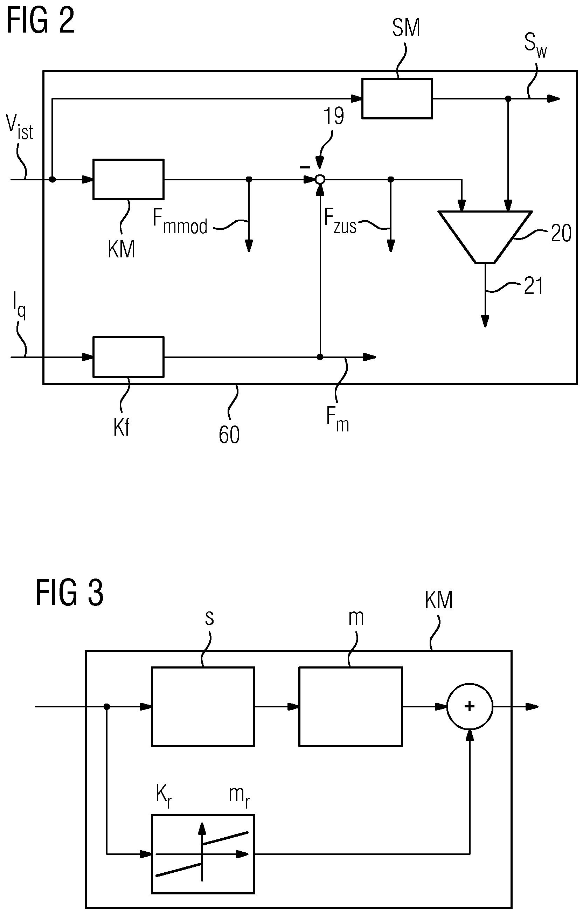

Gemäß FIG 2 ist das Erkennungsmittel 60 als Blockschaltbild dargestellt. Das Erkennungsmittel 60 fordert als Eingangsgrößen eine Istgeschwindigkeit Vᵢₛₜ und einen Statorstrom I_{q}, wobei I_{q} der kraftbildende Iststrom ist. Aus dem Statorstrom I_{q} wird eine für eine aktuelle notwendige lineare Bewegung des Transportläufers 14 aktuell herrschende mechanische Kraft Fₘ ermittelt. Aus der aktuellen Geschwindigkeit Vᵢₛₜ des Transportläufers 14 und einer in einem Kraftmodell KM implementierten Übertragungsfunktion wird eine modellierte Kraft F_{mmod} ermittelt, wobei die Übertragungsfunktion als das Kraftmodell KM die mechanische Kraft eines Transportläufers 14 in einem Normalzustand nachbildet. An einer Subtraktionsstelle 19 wird eine Differenzkraft F_{zus} durch Subtraktion der aktuell herrschenden mechanischen Kraft Fₘ von der modellierten Kraft F_{mmod} gebildet. Mit einem Vergleichsmittel 20 wird geprüft, ob die Differenzkraft F_{zus} einen vorgebbaren Schwellwert S_{w} überschreitet und wenn dies der Fall ist, wird ein Wartungssignal 21 generiert. Dieses Wartungssignal 21 kann dazu genutzt werden, den Betreiber der Anlage zu veranlassen, den Transportläufer 14 zu warten.

Da eine maximal zu erreichende zusätzliche Kraft auch geschwindigkeitsabhängig ist, wird ein Schwellwertmodell SM eingeführt, welches einen Schwellwert S_{w} abhängig von der Geschwindigkeit berechnet und dem Vergleichsmittel 20 zuführt.

Gemäß FIG 3 ist das Kraftmodell KM detaillierter dargestellt.

Die Entwicklung einer Übertragungsfunktion für ein "Modell der mechanischen Kraft" kann mit Hilfe von Differenzialgleichungen bestimmt werden. Diese Differenzialgleichungen können "Precision Motion Control" von Tan Kok Kiong, Lee Tong Heng und Huang Sunan, ISBN 978-3-89578-149-0 nachgelesen werden. In dem Modell soll die mechanische Kraft eines Transportläufers, welcher nicht verschmutzt oder verschlissen, also im Normalzustand ist, nachgebildet werden.

Damit kann ein Reibmodell des Transportläufers 14 im Normalzustand erstellt werden. Das Reibmodell ist eine Funktion der Geschwindigkeit und wird durch eine lineare Funktion angenähert. Dabei entspricht mᵣ der Steigung des Reibmodells und Kᵣ den konstanten Teil.

Hier wird angenommen, dass sich das Modell für negative und positive Geschwindigkeiten gleich verhält. mᵣ und Kᵣ müssen experimentell bestimmt werden.

F_{zus} ergibt sich aus Fm - F_{mmod}. Weil F_{mmod} nur annäherungsweise der mechanischen Kraft Fₘ eines Transportläufers 14 im Normalzustand entspricht, ist F_{zus} auch eine Annäherung. Zu entscheiden ist nun noch, ab welcher Kraft F_{zus} der Transportläufer 14 aus dem System aussortiert werden muss. Dazu wird F_{zus} mit einem Schwellwert S_{w} verglichen. Ist F_{zus} größer als S_{w} soll eine Warnung gesetzt werden. Das "Modell Schwellwert" wird hier als lineare Funktion in Abhängigkeit der Geschwindigkeit modelliert, da F_{zus} geschwindigkeitsabhängig ist und somit S_{w} auch geschwindigkeitsabhängig sein muss. Somit hat man die Möglichkeit S_{w} frei zu bestimmen und verschieden große Werte für F_{zus} zuzulassen, bevor die Warnung gesetzt wird. Der Schwellwert S_{w} muss so angepasst werden, dass nur dann eine Warnung gesetzt wird, wenn es sich um einen fehlerhaften Transportläufer 14 handelt.

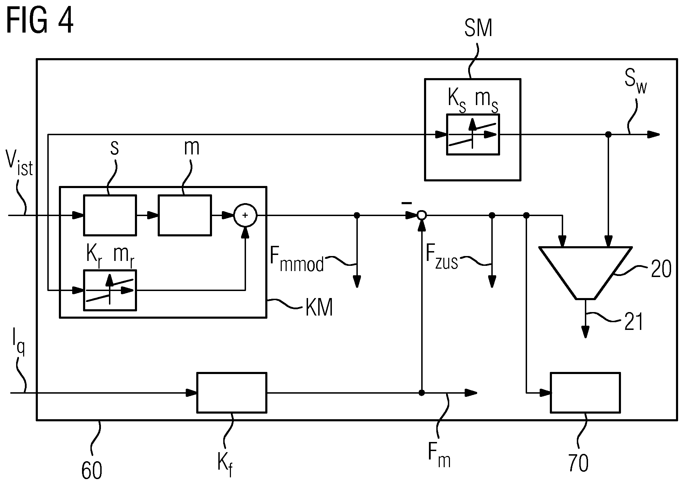

Die FIG 4 zeigt das aus den vorherigen Figuren bekannte Erkennungsmittel 60 in nochmal einen weiteren Detaillierungsgrad. Insbesondere ist bei der FIG 4 in dem Erkennungsmittel 60 ein Fehlerartenzuordnungsmittel 70 eingefügt worden. Das Fehlerartenzuordnungsmittel 70 ermöglicht es, anhand des Betrages der Differenzkraft F_{zus} eine Aussage über eine der folgenden Fehlerarten zu treffen: Eine Verschmutzung des Transportläufers 14, ein einfacher Radbruch am Transportläufer 14 oder ein zweifacher Radbruch am Transportläufer 14.

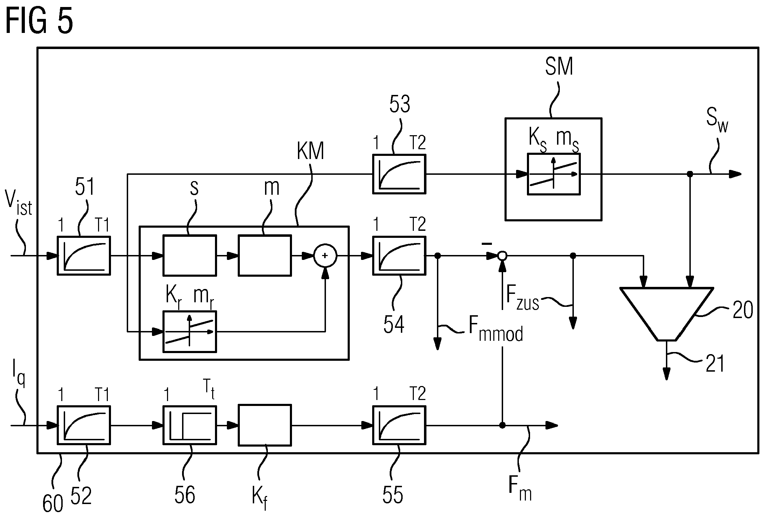

Um einen Algorithmus, beispielsweise in einer Firmware zu implementierten ist gemäß FIG 5 der Algorithmus für das Erkennungsmittel 60 noch einmal weiter detailliert. Für die Eingangsgröße der Geschwindigkeit Vᵢₛₜ werden durch ein erstes Filter (PT1-Glied) 51 die Signalspitzen aus dem Eingangssignal gefiltert, wobei zur Filterung beliebige Filter eingesetzt werden können. Für die Eingangsgröße Statorstrom I_{q} werden die Spitzen durch ein zweites Filter (PT1-Glied) 52 gefiltert. Um Signallaufzeitverzögerungen bei der Istgeschwindigkeit Vᵢₛₜ auszugleichen, ist ein Totzeitglied 56 nach dem zweiten Filter (PT1-Glied) 52 angeordnet. Des Weiteren sind ein drittes Filter 53, ein viertes Filter 54 und ein fünftes Filter 55 mit einer weiteren Zeitkonstante T2 in dem Algorithmus zur Erkennung einer erhöhten Reibung integriert worden.

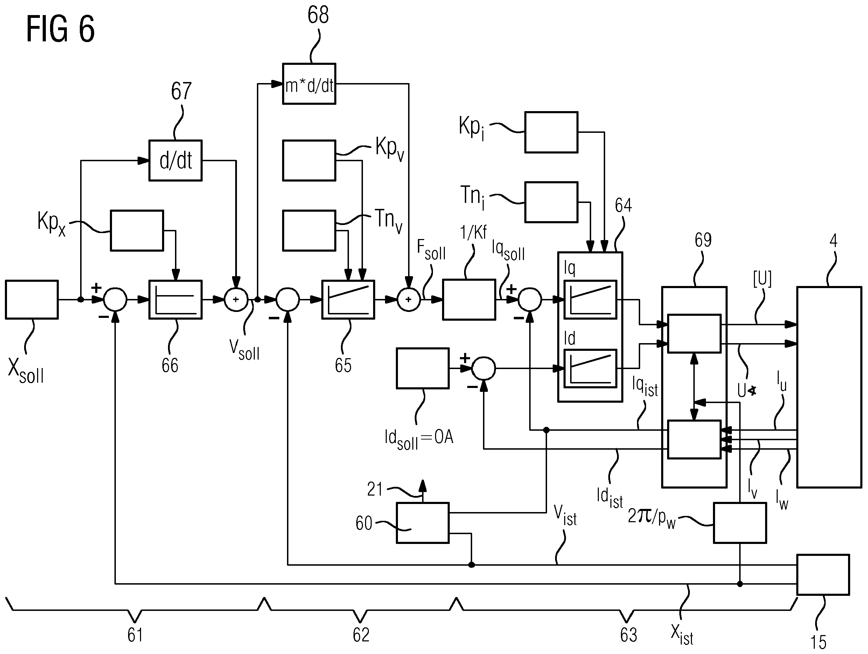

Mit der FIG 6 wird eine vektororientierte Servoregelung für die Statorsegmente 13.1 und 13.2 gezeigt. Diese Servoregelung untergliedert sich in eine Lageregelung 61, eine Geschwindigkeitsregelung 62 und eine Stromregelung (Vektorregelung) 63. Eine Sollposition Xₛₒₗₗ wird mittelt eines Lagereglers 66 und einer Geschwindigkeitsvorsteuerung 67 geregelt. Eine Sollkraft Vₛₒₗₗ wird mittels einer Kraftvorsteuerung 68 und eines Geschwindigkeitsreglers 65 geregelt.

Die vektororientierte Servoregelung ist in einer Kaskadenstruktur aufgebaut und beinhaltet Lage-, Drehzahl- und Stromregelung. Die Stromregelung ist hier in der sogenannten Vektorregelung ausgeführt. Diese berechnet mit Hilfe des Kommutierungswinkels aus dem statorfesten Stromzeigersystem (UVW - Koordinatensystem), bestehend aus den Strömen Iᵤ, Iᵥ und I_{w}, das rotorfeste Stromzeigersystem (dq - Koordinatensystem), bestehend aus den Strömen I_{q} und I_{d}. Dabei ist I_{q} der momentenbildende Strom, welcher ein reiner Wirkstrom ist und I_{d} der feldbildende Strom ist. Dabei wird der feldbildende Strom I_{d} im geregelten Betrieb des Antriebs zu Null geregelt, das bedeutet, dass der Motor in keinem Arbeitspunkt im Feldschwächbetrieb betrieben wird. Die Drehzahl- und die Momentenvorsteuerung verbessern das jeweilige Führungsverhalten der Regler. Eine Nachstellzeit Tₙ und ein Proportionalteil Kₚ der einzelnen Regler können im Inbetriebnahmemodus automatisch bestimmt und auch angepasst werden. Da es sich hier nicht um die Regelung eines rotatorischen Synchronmotors handelt, sondern um die eines linearen Synchronmotors, welcher eine Kraft und kein Moment erzeugt, wird der momentenbildende Strom I_{q} kraftbildender Strom genannt. Außerdem handelt es sich im Folgenden um die Kraftvorsteuerung und nicht um die Momentenvorsteuerung. Der Drehzahlregler wird Geschwindigkeitsregler genannt und die Drehzahlvorsteuerung Geschwindigkeitsvorsteuerung.

Der Wechselrichter 4 erzeugt aus der Stellgröße der Vektorregelung einen Spannungszeiger, dargestellt durch Betrag |U| und Winkel ϕ, wobei über ein PWM Verfahren Signale zur Ansteuerung der IGBT's bereitgestellt werden. Im Motormodul werden die Regelgrößen (Phasenströme) für die Vektorregelung mit einer entsprechenden Messeinrichtung gemessen.

Die Geberauswertung stellt die Istgeschwindigkeit Vᵢₛₜ und die Istposition Xᵢₛₜ für die Servoregelung zur Verfügung. Durch Division der Istpositon Xist durch die Polpaarweite p_{w} und Multiplikation von 2II wird der Kommutierungswinkel für die Vektorregelung berechnet.

Die Regelgröße der Geschwindigkeitsregelung ist die Geschwindigkeit des Transportläufers 14. Die Regelgröße wird mit einem PI-Regler so geregelt, dass diese dem Geschwindigkeitssollwert folgt. Der Regler berechnet die Sollkraft. Ist die Kraftvorsteuerung aktiviert, wird die Sollkraft mit dem Ausgang der Kraftvorsteuerung addiert. Die Addition ergibt die Stellgröße.

In dem vektororientierten Stromregelverfahren werden die Wechselgrößen (Regelgrößen) Iᵤ, Iᵥ, und I_{w} in das dq - Koordinatensystem mit dem Kommutierungswinkel berechnet.

Damit ergeben sich Gleichgrößen für die Istströme. Sie teilen sich in eine kraftbildende (I_{qist}) und eine feldbildende Komponente (I_{dist}) auf. Diese Gleichgrößen können nun mit herkömmlichen PI-Reglern geregelt werden. Notwendig ist jeweils ein PI Regler für den kraftbildenden Teil (I_{q} Regler) und einer für den feldbildenden Teil (I_{d} Regler). Der d-Anteil des Stromes kann verwendet werden um das Feld zu schwächen, dies wird wie bereits beschrieben nicht genutzt. Der Sollwert für die kraftbildende Stromkomponente I_{qsoll} ergibt sich durch Division der Stellgröße des Geschwindigkeitsreglers mit der Kraftkonstante K_{f}.

Um eine erhöhte Reibkraft eines Transportläufers 14 frühzeitig zu erkennen, ist in dem Regelalgorithmus gemäß der FIG 6 das Erkennungsmittel 60 integriert.

## Patentansprüche

1. Verfahren zum Betreiben eines linearmotorbasierten Transportsystems (100), bei welchem ein Transportläufer (14) auf einem Statorsegment (13.1,13.2) bewegt wird, wobei das Statorsegment (13.1,13.2) mittels eines Antriebsmoduls (2a) mit einem Statorstrom (I_{q}) versorgt wird, wodurch ein Magnetfeld gebildet wird und dadurch eine Vorschub-Kraft für einen Vorschub des Transportläufers (14) entsteht,
**dadurch gekennzeichnet, dass**
- aus dem Statorstrom (I_{q}) eine für eine aktuell notwendige lineare Bewegung des Transportläufers (14) aktuell herrschende mechanische Kraft (Fₘ) ermittelt wird, und dass
- aus einer aktuellen Geschwindigkeit (Vᵢₛₜ) des Transportläufers (14) und einer Übertragungsfunktion eine modellierte Kraft (F_{mmod}) ermittelt wird, wobei die Übertragungsfunktion als ein Kraftmodell (KM) die mechanische Kraft eines Transportläufers (14) in einen Normalzustand nachbildet,
- eine Differenzkraft (F_{zus}) durch Subtraktion der aktuell herrschenden mechanischen Kraft (Fₘ) von der modellierten Kraft (F_{mmod}) gebildet wird und geprüft wird, ob
- die Differenzkraft (F_{zus}) einen vorgebbaren Schwellwert (Sw) überschreitet und wenn dies der Fall ist ein Wartungssignal (21) generiert wird, welches den Betreiber veranlasst den Transportläufer zu warten.

2. Verfahren nach Anspruch 1, wobei der Schwellwert (S_{w}) in Abhängigkeit von der Geschwindigkeit (Vᵢₛₜ) mit einer Schwellwertübertragungsfunktion ermittelt wird.

3. Verfahren nach Anspruch 1 oder 2, wobei das Wartungssignal (21) einen Transportläufer (14) spezifischen Wartungsmerker setzt und zyklisch geprüft wird, ob ein Transportläufer (14) einen gesetzten Wartungsmerker aufweist, und wenn das der Fall ist, wird der Transportläufer (14) zur Wartung auf ein Wartungssegment gesteuert oder durch eine Waschanlage gefahren.

4. Verfahren nach einem der Ansprüche 1 bis 3, wobei das Wartungssignal (21) als ein Warnsignal für eine Überschreitung einer zulässigen Reibung bei der Bewegung des Transportläufers (14) auf dem Statorsegment (13.1, 13.2) gewertet wird und anhand des Betrages der Differenzkraft (F_{zus}) eine Aussage über eine der folgenden Fehlerarten getroffen wird:
Verschmutzung des Transportläufers (14),
einfacher Radbruch am Transportläufer (14) oder
zweifacher Radbruch am Transportläufer (14).

5. Verfahren nach Anspruch 4, wobei mittels der Fehlerarten entschieden wird, ob der Transportläufer aussortiert werden muss oder eine Waschanlage anfahren muss.

6. Regeleinheit (2) zur Regelung eines Antriebsmoduls (2a) für ein linearmotorbasiertes Transportsystem (100), bei welchem ein Transportläufer (14) auf einem Statorsegment (13.1, 13.2) bewegt wird, wobei das Statorsegment (13.1, 13.2) mittels des Antriebsmoduls (2a) mit einem Statorstrom (I_{q}) versorgt wird, wodurch ein Magnetfeld gebildet wird und dadurch eine Vorschub-Kraft für einen Vorschub des Transportläufers (14) entsteht,
**gekennzeichnet durch**,
ein Erkennungsmittel (60), umfassend
- ein P-Glied mit einer Kraftkonstanten (K_{f}), welches ausgestaltet ist, aus dem Statorstrom (I_{q}) eine für eine aktuell notwendige lineare Bewegung des Transportläufers (14) aktuell herrschende mechanische Kraft (Fₘ) zu ermitteln,
- ein Kraftmodell (KM) mit einer Übertragungsfunktion, welches ausgestaltet ist, aus einer aktuellen Geschwindigkeit (Vᵢₛₜ) des Transportläufers (14) eine modellierte Kraft (F_{mmod}) zu ermitteln, wobei das Kraftmodell (KM) die mechanische Kraft eines Transportläufers (14) in einen Normalzustand nachbildet,
- eine Subtraktionsstelle (19) ausgestaltet eine Differenzkraft (F_{zus}) **durch** Subtraktion der aktuell herrschenden mechanischen Kraft (Fₘ) von der modellierten Kraft (F_{mmod}) bereitzustellen,
- ein Vergleichsmittel (20) ausgestaltet die Differenzkraft (F_{zus}) mit einen vorgebaren Schwellwert (Sw) zu vergleichen und bei überschreiten des Schwellwertes (Sw) **durch** die Differenzkraft (F_{zus}) ein Wartungssignal (21) zu generieren.

7. Regeleinheit (2) nach Anspruch 6, wobei das Erkennungsmittel (60) weiterhin ein Schwellwertmodell (Sw) aufweist, welches ausgestaltet ist, den Schwellwert (Sw) in Abhängigkeit von der Geschwindigkeit (Vᵢₛₜ) mit einer Schwellwertübertragungsfunktion zu ermitteln.

8. Regeleinheit (2) nach Anspruch 6 oder 7, wobei das Erkennungsmittel (60) weiterhin ein Fehlerartenzuordnungsmittel (70) aufweist, welches ausgestaltet ist, anhand des Betrages der Differenzkraft (F_{zus}) eine Aussage über eine der folgenden Fehlerarten zu treffen:
Verschmutzung des Transportläufers (14),
einfacher Radbruch am Transportläufer (14) oder
zweifacher Radbruch am Transportläufer (14).
